# EUROPÄISCHE PATENTSCHRIFT

(11) **EP 1 994 315 B1**
(45) Veröffentlichungstag und Bekanntmachung des Hinweises auf die Patenterteilung: **13.02.2013**
(21) Anmeldenummer: 07711228.2
(22) Anmeldetag: 03.03.2007
(51) Int. Cl.: F16J 15/32

(54) **RADIALWELLENDICHTUNG**
RADIAL SHAFT SEAL
JOINT A LEVRE RADIAL

(30) Priorität: 09.03.2006 DE 202006003897 U
(43) Veröffentlichungstag der Anmeldung: 26.11.2008
(73) Patentinhaber: VR Dichtungen GmbH, 52531 Übach-Palenberg (DE)
(72) Erfinder: KREUTZER, Siegmar, 6418 KK Heerlen (NL); PAWELLEK, Franz, 96486 Lautertal (DE)
(74) Vertreter: Lippert, Stachow & Partner
(86) Internationale Anmeldenummer: PCT/DE2007/000399
(87) Internationale Veröffentlichungsnummer: WO 2007/101429

(56) Entgegenhaltungen:
- EP-A- 0 706 001
- WO-A-02/052180
- DE-U1- 8 812 628

## Beschreibung

Die Erfindung betrifft eine Radialwellendichtung zur Dichtung eines abgeschlossenen, mit einem fluiden Medium gefüllten Innenraums an einer rotierenden Welle gegenüber der äußeren Atmosphäre mit mindestens einem Membrankörper, der eine Dichtmembran aufweist, die sich mit einer Dichtlippe an die zu dichtende Welle anlegt, insbesondere zur Verwendung bei Kühlsystemen für Fahrzeugmotoren.

Eine solche Radialwellendichtung ist aus der EP-A-706 001 bekannt. Hier ist die Dichtmembran gegen den Druck des fluiden Mediums im Innenraum durch ein Stützglied gestützt, das beispielsweise eine axial festgelegte Scheibe mit einer zentralen Öffnung sein kann, durch die die Welle mit einem notwendigen Abstand vom Rand der Öffnung hindurch tritt. Das Stützglied befindet sich auf der vom Innenraum abgewandten Seite der Dichtmembran. Der an der Welle anliegende Rand ist als zum Innenraum hin schräg gestellte Dichtlippe ausgebildet, wodurch sich die Dichtwirkung aufgrund des Innendrucks selbst verstärkt.

Eine weitere Radialwellendichtung dieser Art ist aus der WO-A-02/052 180 bekannt. Sie umfasst einen ersten Membrankörper mit einer Dichtmembran, die mit einer schräg gegen den Innenraum gestellten Dichtlippe an der Welle anliegt und von einem Stützglied auf der Außenseite gestützt wird. Ein zweiter Membrankörper weist eine zweite Dichtmembran auf, die sich in einem Abstand in Richtung zum Innenraum befindet und ebenfalls von einem Stützglied gestützt wird und mit einer nach innen schräg gestellten Dichtlippe an der Welle anliegt. Die Stützglieder sind üblicherweise aus Metall wie Stahl oder Edelstahl gefertigt. Diese Dichtung hat sich im Betrieb von Pumpen in Kühlsystemen, bei denen das Kühlmittel unter einem Überdruck steht, bewährt, da bei Undichtigkeit einer Dichtmembran die zweite noch hinreichend dichtet.

Es ist jedoch nun üblich geworden, vor der Erstbefüllung des Kühlsystems den inneren Raum mit einer Saugpumpe bis auf einen Druck von weniger als 50 hPa zu'evakuieren, um das ganze System auf Dichtheit zu prüfen. Im gleichen Arbeitsschritt kann dann nach Erreichen eines.Innendrucks von beispielsweise 20 bis 50 hPa automatisch die Befüllung des Systems mit Kühlmittel gestartet werden. Die Dichtlippen der bekannten Dichtungen liegen zwar mit einer gewissen Vorspannung auf der Welle auf und können daher auch einem Unterdruck im Innenraum bis zu einem gewissen Maß standhalten. Aufgrund ihrer Schrägstellung nach innen tritt dabei aber keine Verstärkungswirkung auf, und bei einem Innendruck von etwa 50 hPa oder weniger können sie sich von der Welle abheben und Außenluft eindringen lassen, so dass das System nicht ausreichend evakuiert werden kann..

Um diesem Problem zu begegnen, schlägt die WO-A-02/052 180 die Anwendung einer dritten Dichtmembran mit nach außen schräg gestellter Dichtlippe vor. Dadurch wird jedoch der Aufbau der Dichtung kompliziert und es kommt im Betrieb zu Energieverlusten und zusätzlicher Erwärmung.

Aufgabe der Erfindung ist es, eine einfach aufgebaute Radialwellendichtung des angegebenen Typs bereitzustellen, die es zulässt, das abgedichtete System ohne Zuhilfenahme eines zusätzlichen Bauteils, wie z. B. einer dritten Dichtmembran, auf einen Innendruck von unter 20 hPa zu evakuieren.

Diese Aufgabe wird durch eine Radialwellendichtung nach dem Hauptanspruch gelöst.

Es wurde nämlich gefunden, dass durch eine Beschränkung der Weite des Ringspalts zwischen dem der Welle benachbarten radial innen liegenden Randbereich des Stützglieds und der Welle selbst die nach Abheben der Dichtlippen durch den Spalt strömende Luftmenge so gering gehalten werden kann, dass sie wesentlich kleiner als die von der Saugpumpe abgesaugte Luftmenge ist, so dass ein Vakuum von weniger als 20 hPa erreicht werden kann. Die Weite des Spalts richtet sich dabei nach der Pumpleistung der Saugpumpe und dem angestrebten Endvakuum. Bevorzugt ist der Spalt 0,05 mm breit oder enger, besonders bevorzugt 0,02 mm oder weniger.

Eine solch enge Spaltweite erfordert eine enge Fertigungstoleranz für Welle und Stützglied, um eine Berührung beider und möglicherweise eine Beschädigung des einen oder anderen Teils zu vermeiden. Erfindungsgemäß besteht daher das Stützglied zumindest in seinem der Welle benachbarten Randbereich aus einem unelastischen Kunststoff. Dadurch bleibt die Stützwirkung für die zweite Dichtmembran erhalten, es wird aber eine Beschädigung der Welle vermieden und eine einfachere präzise Fertigung ermöglicht.

Vorzugsweise besteht das ganze Stützglied aus dem unelastischen Kunststoff.

Der Kunststoff ist bevorzugt ein thermoplastischer Kunststoff. Vorteilhaft ist ein hoher Schmelzpunkt des Kunststoffs. Besonders geeignet ist Polyphenylensulfid (PPS).

Vorteilhaft ist der den Ringspalt zwischen Stützglied und Welle begrenzende und der Welle gegenüberliegende Rand des Stützglieds abgefast, beispielsweise auf der von der Dichtmembran abgewandten Seite abgewandten Seite mit einem Winkel von etwa 45°.

In einer bevorzugten Ausführungsform umfasst die erfindungsgemäße Radialwellendichtung neben dem mindestens einen Membrankörper noch einen zweiten Membrankörper, der eine von einem zweiten Stützglied gestützte Dichtmembran mit einer gegen den Innenraum schräg gestellten und an der Welle anliegenden Dichtlippe aufweist, wobei die zweite Dichtmembran von der ersten in Richtung zum Innenraum oder zur äußeren Atmosphäre beabstandet ist.

Vorteilhaft ist mindestens eines der Stützglieder als Winkelring ausgeführt, dessen radialer Schenkel die dem Stützglied benachbarte Dichtmembran (8) stützt. Der axiale Schenkel dieses Stützglieds kann dann den axialen Abschnitt des Membrankörpers stützen.

Die Dichtmembranen der erfindungsgemäßen Radialwellendichtung bestehen bevorzugt aus einem elastomeren Material, das Partikel eines schmierenden Feststoffs, der besonders bevorzugt Graphit oder Polytetrafluorethylen (PTFE) ist, enthält.

Bei der Ausführungsform mit zwei Dichtmembranen ist der Raum zwischen den beiden Dichtmembranen vorteilhaft mit einem Schmiermittel.gefüllt.

Die Erfindung wird nun anhand von Ausführungsbeispielen und beigegebenen Zeichnungen näher erläutert. Es zeigen
Figur 1 einen Querschnitt einer beispielhaften Ausführungsform der erfindungsgemäßen Radialwellendichtung mit der zu dichtenden Welle und zwei Dichtmembranen.
Figur 2 zeigt.im Querschnitt eine gleichartige Dichtung, bei der der innere Rand des Stützglieds abgefasst ist.
Figur 3 zeigt das Detail der Fase.
Figur 4 ist ein Teilquerschnitt einer erfindungsgemäßen Radialwellendichtung mit nur einem Membrankörper.

Die Radialwellendichtung ist in die Lageraufnahme 1 einer Kühlflüssigkeitspumpe, die ein Teil der Wand des abgeschlossenen Innenraums 20 bildet, eingesetzt. Die dem Innenraum 20 gegenüberliegende Seite der Dichtung kommuniziert mit der äußeren Atmosphäre 30.

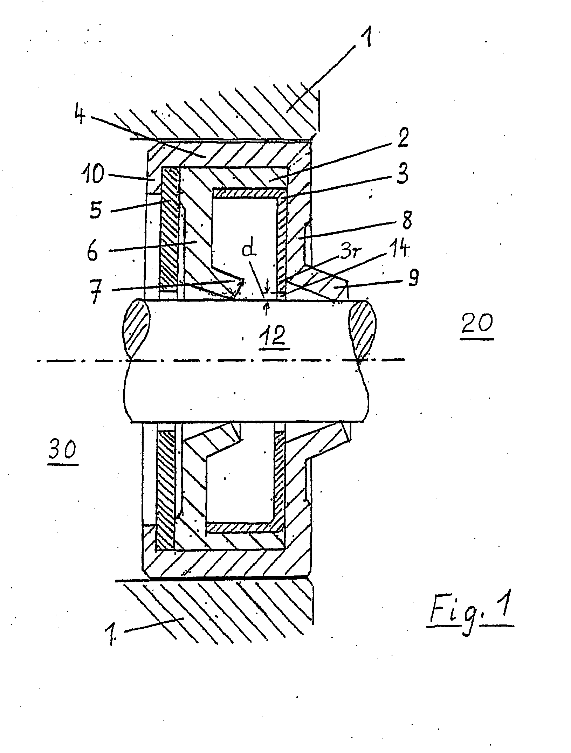

In Figur 1 ist ein zweiter Membrankörper 2 aus einem elastomeren Material auf den axialen Schenkel eines zweiten Stützglieds 3 in Form eines Winkelrings aufgezogen. Das Stützglied 3 besteht aus Polyphenylensulfid (PPS). An den zweiten Membrankörper 2 ist eine zweite Dichtmembran 6 mit einer zweiten Dichtlippe 7 angeformt, die an der Welle 12 dichtend anliegt und schräg gegen den Innenraum gestellt ist. Ein erster Membrankörper 4 aus elastomerem Material, an den auf der Druckseite eine erste Dichtmembran 8 mit einer ebenfalls schräg gegen den Innenraum gestellten und an der Welle anliegenden ersten Dichtlippe 9 angeformt ist, umfasst radial außen den in ihn eingelegten zweiten Membrankörper 2 mit dem zweiten Stützglied 3. Auf der zur Außenatmosphäre 30 gewandten Seite ist auf den ersten Membrankörper 3 ein erstes Stützglied 5 in Form einer gelochten Scheibe aufgelegt. Dieses wird von dem radial nach innen umgreifenden Rand 10 des ersten Membrankörpers 4 auf der Außenseite axial fixiert. Das zweite Stützglied 3 stützt die zweite Dichtmembran 8 gegen Druck aus dem Innenraum 20. Sein radial innen liegender Rand 3r bildet mit der Welle 12 einen Spalt 14 mit einer Weite d von beispielsweise 0,02 mm. Entsprechend stützt das erste Stützglied 5 die erste Dichtmembran 6. In alternativen Ausführungsformen kann auch das erste Stützglied 5 aus PPS geformt sein und einen Ringspalt von beispielsweise 0,02 mm mit der Welle bilden, oder es können beide Stützglieder 3,5 aus PPS bestehen und einen Ringspalt von etwa 0,02 mm mit der Welle bilden.

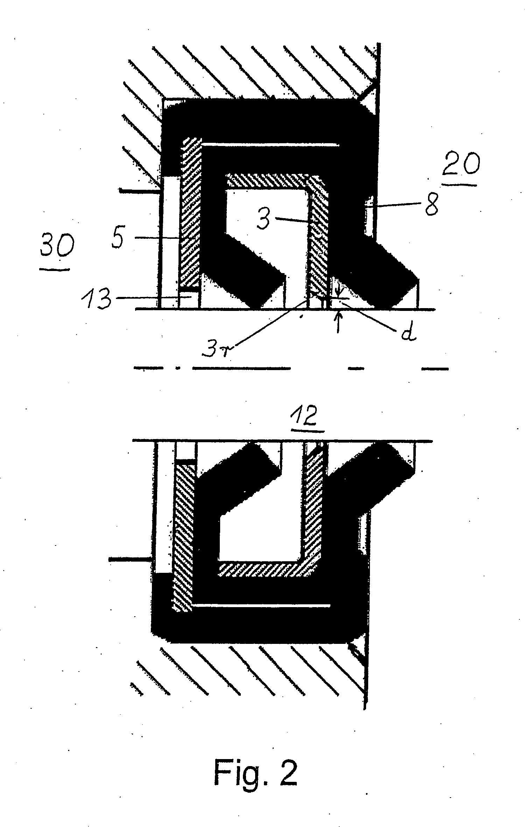

In Figur 2 ist eine bevorzugte erfindungsgemäße Ausführungsform gezeigt, bei welcher der innere Rand 3r des zweiten Stützglieds auf der von der Dichtmembran 8 abgewandten Seite mit etwa 45° abgefasst ist. Diese Ausführungsform bietet den Vorteil, dass eine etwaige Berührung der Welle mit dem inneren Rand 3r des Stützglieds 3 so gut wie keine Schäden verursacht, die Wirkung der Begrenzung des Luftstroms durch den Ringspalt aber in vollem Umfang aufrechterhalten wird. Bei dieser Ausführungsform ist der Spalt 13 zwischen der Welle und dem ersten Stützglied 5 weiter als der Spalt 14 (Figur 1). Wie bereits erwähnt, kann aber auch der Spalt 13 zusätzlich zum oder an Stelle des Spalts 14 oder mit einer Weite von 0,05 mm oder weniger ausgebildet werden, wenn das erste Stützglied zumindest im inneren Randbereich aus unelastischem Kunststoff, z. B. PPS, besteht.

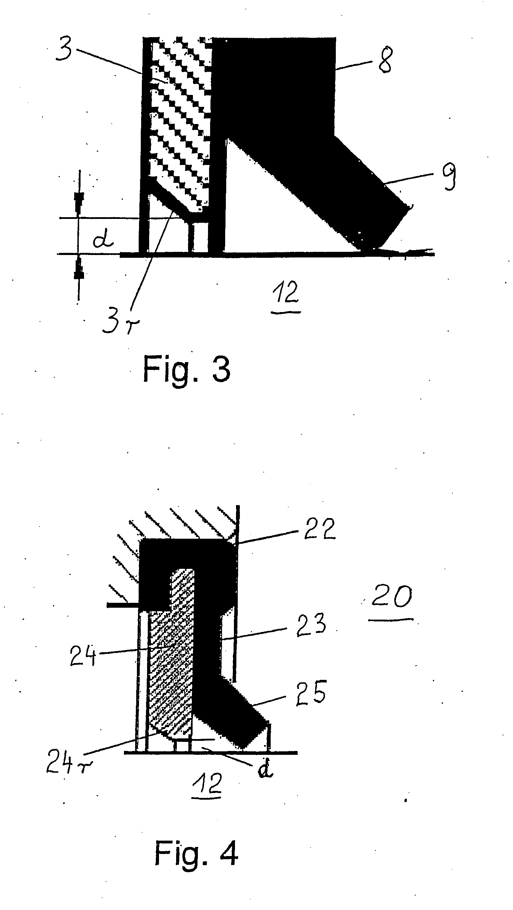

Figur 3 zeigt die Abfasung des inneren Randes 3r des Stützglieds 3 im Detail.

Figur 4 zeigt einen halben Querschnitt einer weiteren Ausführungsform der erfindungsgemäßen Radialwellendichtung mit. nur einem Membrankörper 22 aus elastomerem Material. Dieser weist eine Dichtmembran 23 auf, die mit der Dichtlippe 25 auf der Welle 12 dichtend aufliegt. Das Stützglied 24 ist als abgestufte Scheibe mit zentraler Öffnung ausgebildet, wird vom Membrankörper 22 axial gehalten und stützt die Dichtmembran 23 gegen den Druck im Innenraum 20. Der innere Rand 24r des Stützglieds 24 ist auf der von der Dichtmembran 23 abgewandten Seite mit etwa 45° abgefast und bildet mit der Welle 12 einen Ringspalt mit einer Weite d von etwa 0,02 mm.

Mit der erfindungsgemäßen Radialwellendichtung kann die Dichtigkeitsprüfung und Befüllung eines abgeschlossenen, mit einem fluiden Medium zu füllenden Innenraums 20, beispielsweise eines Kühlsystems für Fährzeugmotoren, wie folgt weitgehend automatisch durchgeführt werden. Nach dem Zusammenbau des abgeschlossenen Innenraums 20 wird dieser mit einer Saugpumpe mit voreingestelltem Saugpumpenstrom verbunden. Der Pumpenstrom muss dabei so eingestellt sein, dass er größer als der aufgrund der Druckdifferenz zwischen äußerem Atmosphärendruck und dem kleinsten zu erreichenden Innendruck durch den Spalt 14 zwischen Stützglied 3 und Welle 12 strömende Luftstrom (Spaltstrom) ist. Zu Beginn des Pumpvorgangs nimmt die Druckdifferenz zwischen Innenraum 20 und äußerer Atmosphäre 30 nach und nach zu. Dabei liegen zunächst die Dichtlippen 7, 9 der Dichtmembranen 6, 8 noch aufgrund ihrer Vorspannung dicht an der Welle 12 an. In diesem Stadium zeigt ein von einem Standard abweichender Verlauf des Innendrucks mit der Zeit eine Undichtigkeit des Systems an. Wenn sich der Innendruck einem von der Vorspannung der Dichtlippen 7, 9 abhängenden Wert, beispielsweise etwa 50 hPa, nähert, werden die Dichtlippen durch den Atmosphärendruck von der Welle abgehoben und Luft strömt durch den Spalt 14 zwischen Welle'12 und Stützglied 3 in den Innenraum. Da dieser Spaltstrom aber kleiner als der Pumpenstrom ist, kann der Innendruck weiter sinken, bis er einen Wert, etwa 20 bis 50 hPa, erreicht, bei dem durch eine geeignete Sensor-Steueranordnung ein Ventil für die automatische Befüllung mit dem fluiden Medium, beispielsweise Kühlflüssigkeit, geöffnet wird. In gleicher Weise lässt sich das Verfahren mit einer Radialwellendichtung mit nur einem Membrankörper ausführen.

### Bezugzeichenliste

- 1: Lageraufnahme
- 2: zweiter Membrankörper
- 3: zweites Stützglied
- 3r: Randbereich des Stützglieds
- 4: erster Membrankörper
- 5: erstes Stützglied
- 6: zweite Dichtmembran
- 7: zweite Dichtlippe
- 8: erste Dichtmembran
- 9: erste Dichtlippe
- 10: Rand
- 12: Welle
- 13: Ringspalt zwischen Stützglied und Welle
- 14: Ringspalt zwischen Stützglied und Welle
- 20: Innenraum
- 22: Membrankörper
- 23: Dichtmembran
- 24: Stützglied
- 24r: Innenrand des Stützglieds
- 30: äußere Atmosphäre
- d: Weite des Spalts 14

## Patentansprüche

1. Radialwellendichtung zur Dichtung eines abgeschlossenen, mit einem fluiden Medium gefüllten Innenraums (20) an einer rotierenden Welle (12) gegenüber der äußeren Atmosphäre (30) mit mindestens einem Membrankörper (4, 22), der eine Dichtmembran (8, 23) mit einer an einer Welle (12) dichtend anlegbaren und zum Innenraum (20) schräg gestellten Dichtlippe (9, 25) aufweist, wobei die Dichtmembran auf der vom Innenraum (20) abgewandten Seite von einem Stützglied (3, 24) gestützt wird, das mit seinem der Welle zugewandten Rand (3r, 24r) mit dieser einen Ringspalt bildet, **dadurch gekennzeichnet, dass** das Stützglied (3) zumindest in seinem der Welle (12) benachbarten Randbereich (3r) aus einem unelastischen Kunststoff besteht und dass die Weite d des Ringspalts (14) zwischen dem Rand (3r) des Stützglieds (3, 24) und der Welle (12) so bemessen ist, dass beim Abpumpen der Luft aus dem Innenraum (20) gegen die durch den Ringspalt (14) nachströmende Luft ein Druck von höchstens 20 hPa im Innenraum (20) erreicht werden kann.

2. Radialwellendichtung nach Anspruch 1, **dadurch gekennzeichnet, dass** der Ringspalt (14) eine Weite (d) von 0,05 mm oder weniger hat.

3. Radialwellendichtung nach Anspruch 2, **dadurch gekennzeichnet, dass** der Spalt (14) eine Weite (d) von 0,02 mm oder weniger hat.

4. Radialwellendichtung nach einem der Ansprüche 1 bis 3, **dadurch gekennzeichnet, dass** das Stützglied (3, 24) ganz aus unelastischem Kunststoff besteht.

5. Radialwellendichtung nach einem der Ansprüche 1 bis 4, **dadurch gekennzeichnet, dass** der Kunststoff des Stützglieds (3, 24) ein thermoplastischer Kunststoff ist.

6. Radialwellendichtung nach Anspruch 5, **dadurch gekennzeichnet, dass** der thermoplastische Kunststoff Polyphenylensulfid (PPS) ist.

7. Radialwellendichtung nach einem der Ansprüche 1 bis 6, **dadurch gekennzeichnet**, das der den Ringspalt begrenzende und der Welle gegenüberliegende Rand des Stützglieds (3, 24) abgefast ist.

8. Radialwellendichtung nach einem der Ansprüche 1 bis 7, **dadurch gekennzeichnet**, das sie neben dem mindestens einen noch einen zweiten Membrankörper (2) umfasst, der eine von einem zweiten Stützglied (5) gestützte Dichtmembran (6) mit einer gegen den Innenraum schräg gestellten und an der Welle anliegenden Dichtlippe (7) aufweist, wobei die zweite Dichtmembran von der ersten in Richtung zum Innenraum (20) oder zur äußeren Atmosphäre (30) beabstandet ist und wobei das erste (3) und/oder das zweite (5) Stützglied aus einem unelastischen Kunststoff bestehen und daß die Weite d des Ringspalts (14) zwischen dem Rand (3r) des Stützglieds (3, 5) und der Welle (12) so bemessen ist, daß beim Abpumpen der Luft aus dem Innenraum (20) gegen die durch den Ringspalt (13, 14) nachströmende Luft ein Druck von höchstens 20 hPa im Innenraum (20) erreicht werden kann.

9. Radialwellendichtung nach einem der vorangehenden Ansprüche, **dadurch gekennzeichnet, dass** das mindestens
eine der Stützglieder (3, 5, 24) als Winkelring ausgeführt ist, dessen radialer Schenkel die dem Stützglied benachbarte Dichtmembran (8, 6, 23) stützt.

10. Radialwellendichtung nach einem der vorangehenden Ansprüche, **dadurch gekennzeichnet, dass** die Dichtmembranen (6, 8, 23) aus einem elastomeren Material bestehen, das Partikel eines schmierenden Feststoffs enthält.

11. Radialwellendichtung nach Anspruch 10, **dadurch gekennzeichnet, dass** die Partikel aus Graphit oder PTFE bestehen.

12. Radialwellendichtung nach Anspruch 8, **dadurch gekennzeichnet, dass** der Raum zwischen den beiden Dichtmembranen (6, 8) mit einem Schmiermittel gefüllt ist.

## Claims

1. Radial shaft seal for sealing a closed internal space (20), filled with a fluid medium, on a rotating shaft (12) against the external atmosphere (30), comprising at least one membrane body (4, 22) displaying a sealing membrane (8, 23) with a sealing lip (9, 25) that can be positioned in sealing fashion on a shaft (12) and is set obliquely to the internal space (20), where the side of the sealing membrane facing away from the internal space (20) is supported by a supporting element (3, 24), the edge (3r, 24r) of which facing the shaft forms an annular gap with the latter, **characterized in that** at least the edge area (3r) of the supporting element (3) adjacent to the shaft (12) is made of a non-elastic plastic material, and **in that** the width d of the annular gap (14) between the edge (3r) of the supporting element (3, 24) and the shaft (12) is dimensioned in such a way that a pressure of 20 hPa at most can be achieved in the internal space (20) when pumping out the air from the internal space (20) against the air flowing in through the annular gap (14).

2. Radial shaft seal according to Claim 1, **characterized in that** the annular gap (14) has a width (d) of 0.05 mm or less.

3. Radial shaft seal according to Claim 2, **characterized in that** the gap (14) has a width (d) of 0.02 mm or less.

4. Radial shaft seal according to one of Claims 1 to 3, **characterized in that** the supporting element (3, 24) consists entirely of non-elastic plastic material.

5. Radial shaft seal according to one of Claims 1 to 4, **characterized in that** the plastic material of the supporting element (3, 24) is a thermoplastic material.

6. Radial shaft seal according to Claim 5, **characterized in that** the thermoplastic material is polyphenylene sulfide (PPS).

7. Radial shaft seal according to one of Claims 1 to 6, **characterized in that** the edge of the supporting element (3, 24) which borders the annular gap, and is located opposite the shaft, is chamfered.

8. Radial shaft seal according to one of Claims 1 to 7, **characterized in that** it comprises, in addition to the at least one membrane body, a second membrane body (2), which displays a sealing membrane (6) that is supported by a second supporting element (5) and displays a sealing lip (7) set obliquely to the internal space and resting on the shaft, where the second sealing membrane is spaced apart from the first in the direction of the internal space (20) or towards the external atmosphere (30), and where the first (3) and/or the second (5) supporting element is made of a non-elastic plastic material, and **in that** the width d of the annular gap (14) between the edge (3r) of the supporting element (3, 5) and the shaft (12) is dimensioned in such a way that a pressure of 20 hPa at most can be achieved in the internal space (20) when pumping out the air from the internal space (20) against the air flowing in through the annular gap (13, 14).

9. Radial shaft seal according to one of the preceding Claims, **characterized in that** at least one of the supporting elements (3, 5, 24) is designed as an angular ring, the radial leg of which supports the sealing membrane (8, 6, 23) adjacent to the supporting element.

10. Radial shaft seal according to one of the preceding Claims, **characterized in that** the sealing membranes (6, 8, 23) are made of an elastomeric material containing particles of a solid lubricant.

11. Radial shaft seal according to Claim 10, **characterized in that** the particles consist of graphite or PTFE.

12. Radial shaft seal according to Claim 8, **characterized in that** the space between the two sealing membranes (6, 8) is filled with a lubricant.

## Revendications

1. Joint à lèvre radial pour l'étanchement d'un espace intérieur (20) fermé et rempli d'un milieu fluide sur un arbre rotatif (12) par rapport à l'atmosphère extérieure (30), ledit joint comprenant au moins un corps de membrane (4, 22) comportant une membrane d'étanchéité (8, 23) avec une lèvre d'étanchéité (9, 25) qui peut s'appliquer de manière étanche contre un arbre (12) et qui est inclinée par rapport à l'espace intérieur, la membrane d'étanchéité étant supportée par un élément de support (3, 24) du côté détourné de l'espace intérieur, ledit élément de support formant, avec son bord tourné vers l'arbre (3r, 24r), une fente annulaire avec cet arbre, **caractérisé en ce que** l'élément de support consiste en une matière synthétique non-élastique au moins dans sa région de bord (3r) adjacente à l'arbre (12) et **en ce que** l'étendue d de la fente annulaire (14) entre le bord (3r) de l'élément de support (3, 24) et l'arbre est dimensionnée de sorte qu'une pression de 20 hPa au maximum peut être obtenue dans l'espace intérieur et contre l'air y entrant de nouveau au travers de la fente annulaire (14), lorsque l'air est pompé de l'intérieur (20).

2. Joint à lèvre radial selon la revendication 1, **caractérisé en ce que** la fente annulaire (14) a une étendue (d) de 0,05 mm ou moins.

3. Joint à lèvre radial selon la revendication 1, **caractérisé en ce que** la fente annulaire (14) a une étendue (d) de 0,02 mm ou moins.

4. Joint à lèvre radial selon l'une des revendications 1 à 3, **caractérisé en ce que** l'élément de support (3, 24) consiste entièrement d'une matière synthétique non-élastique.

5. Joint à lèvre radial selon l'une des revendications 1 à 4, **caractérisé en ce que** la matière synthétique de l'élément de support (3, 24) est une matière synthétique thermoplastique.

6. Joint à lèvre radial selon la revendication 5, **caractérisé en ce que** la matière synthétique est le polyphénylène sulfide (PPS).

7. Joint à lèvre radial selon l'une des revendications 1 à 6, **caractérisé en ce que** le bord de l'élément de support (3, 24) délimitant la fente annulaire et opposé à l'arbre est chanfreiné.

8. Joint à lèvre radial selon l'une des revendications 1 à 7, **caractérisé en ce qu'**en plus de l'au moins un corps de membrane ledit joint comporte un deuxième corps de membrane (2) comprenant une membrane d'étanchéité (6) supportée par un deuxième élément de support et ayant une lèvre d'étanchéité (7) s' appliquant contre l'arbre et étant inclinée par rapport à l'intérieur, la deuxième membrane d'étanchéité étant écartée de la première membrane d'étanchéité vers l'intérieur (20) ou vers l'atmosphère extérieure (30), et le premier (3) et/ou deuxième (5) élément de support consistant en une matière synthétique élastique, et **en ce que** l'étendue d de la fente annulaire (14) entre le bord (3r) de l'élément de support (3, 5) et l'arbre (12) est dimensionnée de sorte qu'une pression de 20 hPa au maximum peut être obtenue dans l'espace intérieur et contre l'air y entrant de nouveau au travers de la fente annulaire (13, 14), lorsque l'air est pompé de l'intérieur (20).

9. Joint à lèvre radial selon l'une des revendications précédentes, **caractérisé en ce qu'**au moins l'un des éléments de support (3, 5, 24) est formé comme d'anneau angulaire dont la branche radiale supporte la membrane d'étanchéité (8, 6, 23) adjacente à l'élément de support.

10. Joint à lèvre radial selon l'une des revendications précédentes, **caractérisé en ce que** les membranes d'étanchéité (6, 8, 23) consistent en une matière élastomère contenant des particules d'une matière solide lubrifiante.

11. Joint à lèvre radial selon la revendication 10, **caractérisé en ce que** les particules consistent en graphite ou PTFE.

12. Joint à lèvre radial selon la revendication 8, **caractérisé en ce que** l'espace entre les deux membranes d'étanchéité (6, 8) est rempli d'un lubrifiant.
